Europäisches Patentamt

European Patent Office

Office européen des brevets

(19)

(11) **EP 0 874 472 A2**

(12) ## EUROPÄISCHE PATENTANMELDUNG

(43) Veröffentlichungstag:
28.10.1998 Patentblatt 1998/44

(51) Int Cl.⁶: **H04B 3/54**, H04L 27/26

(21) Anmeldenummer: 98810251.3

(22) Anmeldetag: 23.03.1998

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 17.04.1997 DE 19716011

(71) Anmelder: ABB RESEARCH LTD.
8050 Zürich (CH)

(72) Erfinder:
• Deck, Bernhard
79809 Weilheim (DE)

• Lehmann, Josef
79761 Waldshut-Tiengen (DE)
• Ramseier, Stefan, Dr.
5242 Birr (CH)
• Westby, Oddleif
1346 Gjettum (NO)

(74) Vertreter: Weibel, Beat et al
Asea Brown Boveri AG
Immaterialgüterrecht(TEI)
Haselstrasse 16/699 I
5401 Baden (CH)

(54) **Verfahren und Vorrichtung zur Informationsübertragung über Stromversorgungsleitungen**

(57)      Die Erfindung beschreibt ein Verfahren und System zur schnellen und störungsfreien Datenkommunikation über Energieversorgungsnetze auf beliebigen Spannungsebenen. Die kombinierte Wirkung von Störungen durch Signalverzerrung, frequenzselekive Signalabschwächung oder -verrauschung und durch Impulsstörungen wird durch Verwendung eines MCM-Mehrträgermodulationsverfahrens reduziert. Durch Kombination des MCM-Verfahrens mit einem speziell adaptierten Interleaver (Daten-Verwürfler) und einer Fehlerschutzkodierung können die Fehlerraten drastisch reduziert und die Übertragungsgeschwindigkeiten deutlich über 2 kbit/s erhöht werden.

Fig. 1

EP 0 874 472 A2

## Beschreibung

## TECHNISCHES GEBIET

Die vorliegende Erfindung betrifft das Gebiet der Datenkommunikation über Stromleitungen auf Nieder-, Mittel- und Hochspannungsebene. Sie geht aus von einem Verfahren und System zur Datenübertragung über ein Stromversorgungsnetz nach dem Oberbegriff des ersten und sechsten Anspruchs.

## STAND DER TECHNIK

Die Erfindung hat ein Verfahren und eine Vorrichtung für eine schnelle und zuverlässige Informationsübertragung über Stromverteilungsnetze beliebiger Spannungsebenen zum Gegenstand. Die Verwendung dieser bestehenden Netze zur Datenkommunikation ist von grosser wirtschaftlicher Bedeutung. Elektrizitätsversorgungsunternehmen möchten ohne Neuinstallation von Leitungen beispielsweise Einrichtungen des Stromverteilungsnetzes abfragen und fernbedienen oder durch Fernabfragen und -steuerungen bei Endverbrauchern die Auslastung des Netzes optimieren. Auch können bestehende Leitungen als Nachrichtenkanäle verwendet oder Dritten angeboten werden. Haupthindernis für derartige Anwendungen ist jedoch die Tatsache, dass Strom- bzw. Energieversorgungsnetze als Kommunikationskanal sehr schlechte Übertragungseigenschaften besitzen und starken, unvermeidlichen elektromagnetischen Störungen ausgesetzt sind.

Die Erfindung nimmt auf einen Stand der Technik Bezug, wie er z. B. aus der europäischen Patentschrift EP 0 238 813 B1 bekannt ist. Darin wird ein Verfahren zur Datenübermittlung über Stromversorgungsleitungen offengelegt, das speziell die zeit- und frequenzselektiven Schwunderscheinungen des Übertragungskanals bekämpft. Zu diesem Zweck wird die Information mehrfach übermittelt, indem identische Informationseinheiten bzw. Symbole bzw. Bitworte durch Replikation erzeugt und mit hinreichendem Zeitabstand auf unterschiedlichen Trägerfrequenzen übertragen werden. Dabei wird immer nur auf einer einzigen, pseudo-zufällig variierenden Trägerfrequenz in einem "frequency hopping" bzw. FH-Verfahren gesendet. Die Trägerfrequenzmodulation geschieht vorzugsweise mit einem ebenfalls bekannten "phase shift keying" bzw. PSK-bzw. Phasenumtastungs-Verfahren oder "binary phase shift keying" bzw. BPSK-Verfahren. Zusätzlich können übertragungsbedingte Symbolverfälschungen mittels einer Fehlerschutzkodierung korrigiert werden. Die Kodierung erfolgt vorzugsweise mit einem aus der Literatur bekannten sogenannten "forward error correction code".

Nachteilig bei diesem Verfahren ist u. a. die eingeschränkte Übermittlungsgeschwindigkeit bzw. Bitrate aufgrund des FH-Verfahrens. Generell können herkömmliche Verfahren Übermittlungsfehler, die durch Kombinationen typischer Störungen auf der Leitung verursacht werden, nicht zuverlässig vermeiden. Beispielsweise kann ein permanenter schmalbandiger Störer die Übertragung eines ersten Symbols auf der entsprechenden Trägerfrequenz völlig verrauschen und eine Impulsstörung die Übertragung des duplizierten Symbols trotz Verwendung einer anderen Trägerfrequenz verunmöglichen.

Gemäß des U. S. Pat. No. 5,185,591 ist es darüberhinaus Stand der Technik, zur Datenkommunikation über Stromversorgungsleitungen die identisch replizierte Information gleichzeitig über mehrere Trägerfrequenzen zu senden. Auf diese Weise sollen destruktive Interferenzen durch stehende Wellen auf der Leitung für die verschiedenen Übertragungsfrequenzen so verteilt werden, dass an jedem Punkt der Leitung eine hinreichende Signalstärke empfangen werden kann. Zur Trägermodulation werden das PSK-Verfahren, ein sogenanntes "frequency shift keying" oder FSK- bzw. Frequenzumtastungs-Verfahren oder ein "on/off key modulation"-Verfahren vorgeschlagen. Die äusserst geringe Bitrate von typisch <100 Bits pro Sekunde (bits/s) macht aber diese Form der Mehrfachübertragung gänzlich unattraktiv.

Aus dem U. S. Pat. No. 4,577,333 ist ferner ein Datenübertragungssystem für Kanäle mit starken elektromagnetischen Störungen wie z. B. Stromverteilungsleitungen bekannt. Zur Verbesserung des FSK-, PSK- oder eines sogenannten "amplitude shift keying" bzw. ASK- bzw. Amplitudenumtastungs-Verfahrens wird ein "composite shift keying" bzw. CSK-Modulationsverfahren vorgeschlagen. Dabei ordnet man den Bitwerten 0 und 1 zwei Frequenzen zu und bestätigt die Aussendung einer der beiden Frequenzen durch eine begleitende dritte Frequenz. Diese Redundanz in Kombination mit Datenblock-Übermittlungsprotokollen wird zur Fehlererkennung und -korrektur eingesetzt. Offensichtlich begrenzt hier die Einschränkung auf nur drei fixierte Trägerfrequenzen die Verfügbarkeit und die Zuverlässigkeit bzw. Übertragungskapazität der Stromleitung als Nachrichtenkanal erheblich.

Verfahren für eine Punkt-zu-Punkt Kommunikation auf Hochspannungsleitungen wurden z. B. in "IEEE guide for power-line carrier applications" (Autor: Power System Communications Committee of the IEEE) vom Institute of Electrical and Electronical Engineering, New York (1981) unter der Berichtsnummer ANSI/IEEE Std 643-1980 veröffentlicht. Bei Punkt-zu-Punkt Kommunikation kann das Übermittlungssystem an die Gegebenheiten des Kanals angepasst werden, aber die Flexibilität ist entsprechend eingeschränkt.

Ein spezielles Mehrträgermodulationsverfahren ist z. B. aus J. A. Bingham, "Multicarrier Modulation for Data Transmission: An Idea whose Time Has Come", IEEE Communications Magazine Vol. 28, Mai 1990, unter dem Namen "multicarrier modulation"- bzw. MCM-Verfahren bekannt. Es werden die Daten parallel mit hoher Gesamtübertragungsrate auf mehreren Subbändern verschiedener Trägerfrequenz gesendet. MCM ist robust gegen sogenannte "intersymbol interference" bzw. Signalverzerrungen und gegen schmalbandige Störer, jedoch nicht gegen Impulsstörungen. Bisher wird MCM für Telefonmodems oder für nichtleitungsgebundene Nachrichtenkanäle wie z. B. digitalen Satelliten-Rundfunk und Mobilfunk verwendet

Die Störanfälligkeit digitaler Übertragungssysteme kann ferner durch "Interleaving", d. h. Verwürfelung der zu sendenden Daten, in Kombination mit Fehlerkorrektur verbessert werden. In der empfangsseitig rekonstruierten Information sind Übertragungsfehler dann so weit verstreut, dass sie korrigierbar sind. Eine Übersicht über solche Verfahren findet sich z. B. in B. Sklar , "Digital Communications", S. 357 ff, Prentice Hall, Englewood Cliffs, 1988.

## DARSTELLUNG DER ERFINDUNG

Die Erfindung stellt sich die Aufgabe, ein Verfahren und System zur Informationsübermittlung über Stromversorgungsnetze anzugeben, welches eine Nachrichtenverbindung mit verbesserter Übertragungsqualität, insbesondere mit hoher Verfügbarkeit, geringer Fehlerhäufigkeit und schneller Datenrate, weitgehend unabhängig von den Übertragungseigenschaften des Netzes und seinen elektromagnetischen Störungen schafft.

Diese Aufgabe wird erfindungsgemäss durch die Merkmale des Anspruchs 1 und 6 gelöst.

Kern der Erfindung ist es nämlich, eine Mehrträgermodulationsmethode mit einem speziellen Interleaver zu kombinieren, wobei der Interleaver die Daten umordnet, um benachbarte Daten zeitlich zu trennen und dadurch impulsartige Störungen in Verbindung mit Fehlerschutzkodierung zu neutralisieren, und der Modulator die Daten auf parallele Sendekanäle mit mehreren Trägerfrequenzen aufteilt, um hohe Datenraten und geringe Empfindlichkeit gegen frequenzselektive Störungen und Signalverzerrungen zu erzielen.

Ein erstes Ausführungsbeispiel stellt schematisch eine unidirektionale Nachrichtenverbindung über eine Stromleitung zwischen zwei Teilnehmern dar.

Drei weitere Ausführungsbeispiele beschreiben einen Sender-, Modulator- und Empfängeraufbau zur Implementierung des erfindungsgemässen Datenübertragungsverfahrens.

Andere Ausführungsbeispiele ergeben sich aus den abhängigen Ansprüchen.

Ein Vorteil der Erfindung besteht darin, dass eine sehr schnelle, aber trotzdem äusserst störunempfindliche Datenübertragung über Stromverteilnetze geschaffen wird.

Speziell vorteilhaft ist es, dass die für Stromverteilnetze typischen Übertragungsstörungen auch in ihrer kombinierten Wirkung weitgehend neutralisierbar sind.

Ein weiterer Vorteil ist in der grossen Unabhängigkeit des erfindungsgemässen Übermittlungsverfahren von den Übertragungseigenschaften des Stromverteilnetzes zu sehen. Dadurch wird Datenkommunikation auf beliebigen Spannungsebenen und unter veränderlichen Konfigurationen und Betriebszuständen des Netzes mit einer beliebigen Zahl uni- oder bidirektionaler Kommunikationsteilnehmer möglich.

## KURZE BESCHREIBUNG DER ZEICHNUNG

Die Erfindung wird nachstehend anhand von Ausführungsbeispielen erläutert. Es zeigen:

Fig. 1    die schematische Anordnung eines Übertragungssystems zur Durchführung des erfindungsgemässen Verfahrens mit einem Sender und einem Empfänger;

Fig. 2    den inneren Aufbau eines Senders gemäss Fig. 1 für eine bevorzugte Ausführungsform des Verfahrens;

Fig. 3    den inneren Aufbau eines Modulators für den Sender nach Fig. 2;

Fig. 4    den inneren Aufbau eines Empfängers gemäss Fig. 1 in einer zum Sender gemäss Fig. 2 passenden Ausgestaltung.

In den Figuren sind gleiche Teile mit gleichen Bezugszeichen versehen.

## WEGE ZUR AUSFÜHRUNG DER ERFINDUNG

Zunächst werden typische Störungen auf Stromversorgungsnetzen analysiert und dann anhand von Ausführungsbeispielen dargelegt, wie die Erfindung die Störeinflüsse auf die Signalübertragung weitgehend zu neutralisieren vermag. Die Signale werden im Netzwerk frequenz- und zeitselektiv in Amplitude und Phase verändert und mit zusätzlichen Rauschsignalen überlagert. Daraus resultieren drei hauptsächliche Störungen:

1. Signalverzerrungen ("intersymbol interference"),

2. schmalbandige Signalabschwächungen oder schmalbandiges Rauschen ("narrow band jammer"),

3. kurzzeitige, breitbandige Impulsstörungen ("spiky noise").

Die Verzerrungen können dazu führen, dass in zeitlicher Nähe zueinander ausgesendete Symbole überlappen und beim Empfang nicht mehr exakt identifizierbar sind. Schmalbandige spektrale Signalabsorption kann durch stehende Wellen aufgrund von Echos, durch Resonanzen o. ä. hervorgerufen werden. Die in einem schmalen Frequenzband konzentrierten Rauschsignale wirken oft als permanente Störquelle. Andererseits können Impulsstörungen kurzzeitig die gesamte Übertragung in einem breiten Frequenzband beeinträchtigen.

Herkömmliche Modulationsverfahren müssen auf einem derart schlechten Nachrichtenkanal inakzeptable Kompromisse hinsichtlich Datenübertragungs- und Datenfehlerraten schliessen und können der hier gestellten Aufgabe nicht gerecht werden. Neben den oben zitierten, langsamen Mehrträgerverfahren wird häufig einfach Frequenzumtastung (FSK-Verfahren) verwendet. Der Vorteil von FSK liegt in der geringen Komplexität der Empfängerstruktur wie auch in der Immunität gegen Verzerrungen bei kleinen Datenübertragungsraten. Allerdings ist FSK sehr empfindlich auf schmalbandige Störungen und auf Impulsstörungen. Weitere Verfahren benutzen Bandspreizmodulation ("direct sequence spread spectrum" oder "frequency hopping spread spectrum"). Solche Verfahren sind relativ robust gegenüber Verzerrungen und Störungen, können jedoch bei vorgegebener Bandbreite nur eine vergleichsweise geringe Datenübertragungsrate erreichen.

In der Erfindung wird deshalb erstmals vorgeschlagen, das MCM-Verfahren zum Informationsaustausch über Energieversorgungsnetze zu verwenden und derart weiterzuentwickeln, dass eine hinreichend störungsfreie Übertragung ohne Verlust an Geschwindigkeit resultiert.

Bezüglich der detaillierten Funktionsweise des MCM-Verfahrens und möglicher Trägermodulationsverfahren (FSK, PSK, ASK, usw.) wird hier auf die eingangs zitierten Schriften von J. A. Bingham und B. Sklar verwiesen. Ein wichtiges Kennzeichen des MCM-Verfahrens ist die Abnahme von Signalverzerrungen bei konstanter Gesamtdatenrate mit zunehmender Zahl von Trägerfrequenzen bzw. Subbändern bzw. Kanälen. Bei mehr Kanälen kann nämlich die Symbollänge erhöht und die Bitrate in jedem Kanal erniedrigt werden. Eine völlige Elimination der Signalverzerrungen ist durch Einführung zeitlicher Schutzintervalle zwischen der Übertragung einzelner Symbole möglich. Das Schutzintervall kann auch durch einen sogenannten zyklischen Präfix aufgefüllt werden, bei dem der letzte Teil eines Symbols als Präfix vor das Symbol gestellt wird. Dieses Verfahren ist z. B. in J. S. Chow et al., "A Discrete Multitone Transceiver System for HDLS Applications", IEEE Journal on Selected Areas in Communications, Vol. 9 No. 6, S. 895-908, August 1991 beschrieben. Auch die Robustheit gegenüber schmalbandigen Störungen lässt sich durch eine geeignete Fehlerkorrektur verbessern. Jedoch ist MCM per se immer noch anfällig auf Impulsstörungen, welche die Kommunikation vorübergehend auf mehreren Trägern stören oder sogar zu einem kurzen Unterbruch der Übertragung auf allen Trägern führen. Diese Anfälligkeit kann auf Kosten der Gesamtübertragungsrate oder mit Hilfe der Fehlerschutzkodierung teilweise zurückgedrängt werden.

Die Erfindung löst dieses Problem wirkungsvoller auch für hohe Datenübertragungsraten von 2 kbit/s und darüber dadurch, dass ein neues Interleaving-Verfahren geschaffen wird, das so an das MCM-Verfahren adaptiert ist, dass in Kombination mit Fehlerschutzkodierung eine Immunität gegen alle drei Typen von Störungen erreicht wird. In B. Sklar, "Digital Communications", S. 357 ff., wird bei herkömmlichen Interleavern zwischen Block- und Faltungsinterleavern unterschieden. In Blockinterleavern werden Daten spaltenweise in eine Matrix eingelesen und zeilenweise wieder ausgelesen. In Faltungsinterleavern werden Daten durch Ein- und Auslesen in Schieberegister unterschiedlicher Länge umgruppiert. Der erfindungsgemässe Interleaver stellt hingegen einen verallgemeinerten Blockinterleaver dar, in dem nach zeilenweiser Auffüllung der Matrix die Zeilen vertauscht und erst dann die Spalten ausgelesen werden. In den Ausführungsbeispielen wird die genaue Interleaver-Vorschrift in ihrem Zusammenwirken mit dem MCM-Verfahren und einer Fehlerschutzkodierung dargelegt.

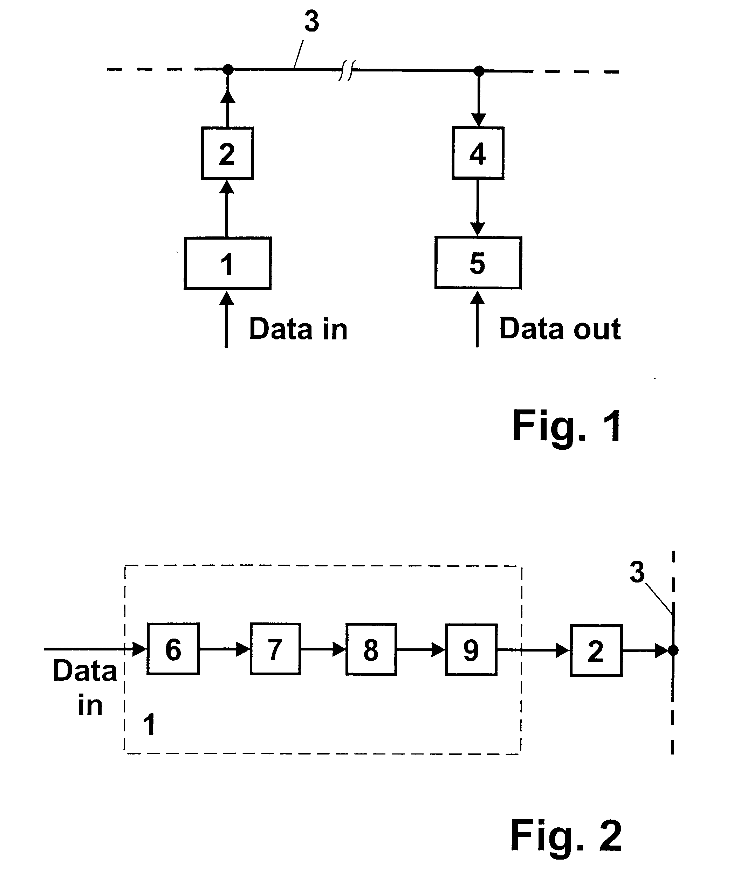

In Fig. 1 ist die grundsätzliche, schematische Anordnung für ein Übertragungssystem dargestellt, wie es für die Durchführung des erfindungsgemässen Verfahrens Verwendung findet. Die zu übermittelnden Daten gelangen auf den Dateneingang des Senders (1), werden dort auf eine geeignete Trägerfrequenz aufmoduliert und über ein erstes Koppelglied (2), beispielsweise einen Koppelkondensator, auf eine Netzleitung (3) eines Stromversorgungsnetzes gegeben. Die Netzleitung (3) kann Teil der Nieder-, Mittel- oder Hochspannungsebene des Stromversorgungsnetzes sein. Zur Vereinfachung sind in der Figur andere Teile des Stromnetzes wie z. B. Unterstationen weggelassen. Über die Netzleitung (3) wird die modulierte Trägerfrequenz an einen Empfänger (5) übermittelt, der über ein zweites Koppelglied (4), das nicht notwendigerweise vom gleichen Typ wie das Koppelglied (2) ist, an die Netzleitung (3) angekoppelt. Im Empfänger (5) werden die Daten durch Demodulation des Empfangssignals wiedergewonnen und stehen an einem Datenausgang zur weiteren Verarbeitung zur Verfügung.

Der innere Aufbau des Senders (1) aus Fig. 1, wie er für eine bevorzugte Ausführungsform des Verfahrens geeignet ist, ist in Fig. 2 wiedergegeben. Die zu übermittelnden Daten werden innerhalb des Senders (1) zunächst auf einen Kodierer (6) gegeben, der vorzugsweise mit einem "forward error correction code" arbeitet. Einzelheiten über den Kode und den Kodierer können beispielsweise aus dem anfangs zitierten Buch von B. Sklar oder aus W. Peterson und E. Weldon, "Error Correcting Codes", MIT Press, Cambridge, USA, 1972, entnommen werden. Die Kodierung von Daten beruht auf der Schaffung von Redundanz, z. B. durch Faltungskodierung oder Hinzufügung von Kontrolldaten. Die bei der Kodierung anfallenden Daten werden anschliessend in einem Interleaver (7) verwürfelt. Dadurch wird erreicht, dass Daten, die vorher nahe beieinander lagen, nun weit voneinander entfernt sind. Die genaue Funktion ist beim De-Interleaver (16) beschrieben. Die umgeordneten Daten gelangen vom Interleaver (7) zum Modulator (8), wo sie erfindungsgemäss mit einer Mehrträger-Modulation (MCM) moduliert werden.

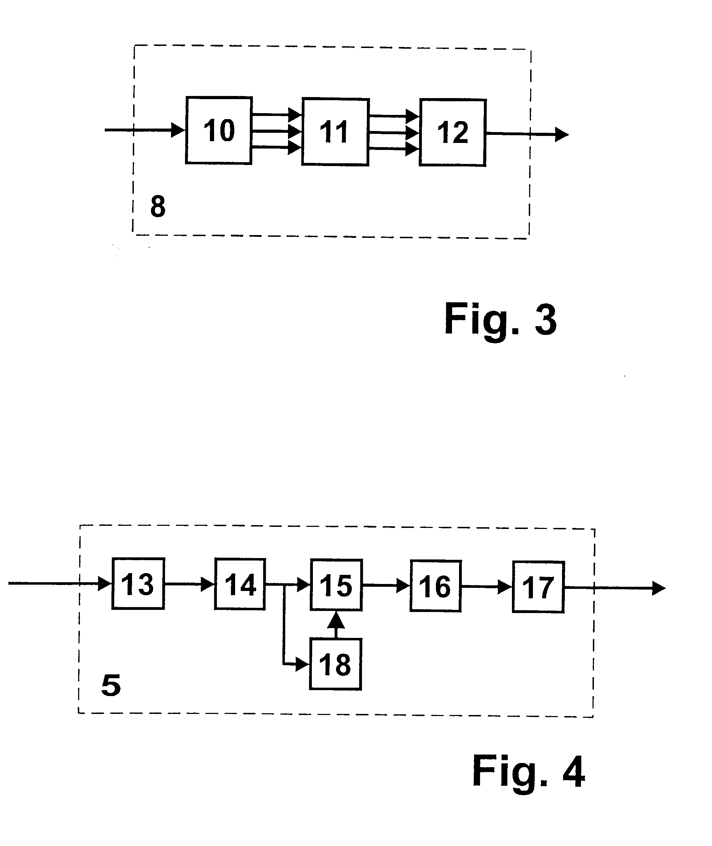

Der detaillierte Aufbau des Modulators (8) ist in Fig. 3 dargestellt. Für die folgende Beschreibung wird angenommen, dass mehrere Trägerfrequenzen verwendet werden, die beliebig, z. B. zueinander orthogonal und insbesondere aequidistant in einem Frequenzbereich zwischen 20 kHz bis zu einigen 100 kHz, wählbar sind. Die zu modulierenden Daten werden zuerst in einem Seriell-Parallelwandler (10) in parallele Subsymbolströme umgewandelt. Ein Subsymbol kann dabei ein oder mehrere Bits enthalten. Diese Subsymbolströme werden im MCM-Modulator (11) parallel auf mehrere Kanäle moduliert und im Summierer (12) zusammengeführt. Eine mögliche Realisierung des Modulators (8) wird im anfangs zitierten Artikel von J. A. Bingham beschrieben, die auf einer inversen "Fast" Fourier Transformation beruht. Das modulierte Signal wird schliesslich auf einen nachgeschalteten Leistungsverstärker (9) gegeben und dann über das Koppelglied (2) in die Netzleitung (3) eingekoppelt.

Eine mögliche Realisierung des Empfängers (5) ist in Fig. 4 gezeigt. Von der Netzleitung (3) wird das Empfangssignal über das Koppelglied (4) abgenommen, in einem Frequenzfilter (13) von anderen störenden Frequenzen getrennt und in einem Verstärker (14) mit einem einstellbaren Verstärkungsfaktor verstärkt. Hinter dem Verstärker ist ein MCM-Demodulator (15) angeordnet, der das erfindungsgemäss modulierte Signal wieder in das Basisband demoduliert. Die Struktur des Demodulators hängt u. a. von der Anzahl der modulierten Kanäle ab und kann vorzugsweise mit einer diskreten Fourier Transformation, einer "Fast" Fourier Transformation oder einer Goertzel Transformation durchgeführt werden. Die für die Demodulation notwendige Information zur Synchronisation der Datenblock-Übermittlung zwischen Sender und Empfänger wird in einer Synchronisationsschaltung (18) erzeugt. Das demodulierte Signal wird in einem De-Interleaver (16) so verwürfelt, dass die im Interleaver (7) erzeugte Umordnung wieder rückgängig gemacht wird. Ausgangsseitig ist im Empfänger (5) schliesslich noch ein Dekodierer (17) vorgesehen, der die mit dem "forward error correction code" kodierten Daten wieder in unkodierte Daten zurückverwandelt. Zur Dekodierung kann im Falle eines Faltungskodes (convolutional code) insbesondere ein Viterbi-Dekoder eingesetzt werden. Dadurch lässt sich die Fehlerrate wesentlich reduzieren.

Ziel der Verwürfelung im Interleaver (7) und De-Interleaver (16) ist es, die durch den Übertragungskanal erzeugten Fehler so zu verteilen, dass ihre Schädlichkeit für die Informationsübermittlung begrenzt bleibt und insbesondere ein "forward error correction code" optimal wirksam wird. Bei Verwendung eines Faltungskodes soll die minimale Distanz zwischen zwei fehlerhaften Daten am Eingang des Dekodierers (17) möglichst gross sein, d.h. die fehlerbehafteten Daten sollen gleich verteilt sein und nicht in Bursts auftreten. Solche Fehlerbursts werden auf der Netzleitung (3) durch schmalbandige Störungen und Impulsstörungen verursacht. Das verwendete Modulationsverfahren MCM, bei dem die zu übertragenden Daten vorzugsweise wie weiter unten beschrieben zu einzelnen Symbolen zusammengefasst werden, hat die gewünschte Eigenschaft, schmalbandige Störungen gleichmässig im demodulierten Datenstrom zu verteilen. Impulsstörungen führen am Ausgang des Demodulators (15) jedoch zu einem Fehlerburst. Die Kombination Interleaver (7) und De-Interleaver (16) soll deshalb so funktionieren, dass die Fehler aufgrund beider Arten von Störungen am Ausgang des De-Interleavers (16) gleichmässig verteilt sind.

Herkömmliche Block- oder Faltungs-Interleaver erfüllen die gestellten Anforderungen nicht und führen zu einer unerwünscht hohen Fehlerrate. Mit dem erfindungsgemässen Verfahren kann dieser gravierende Nachteil behoben werden. Dazu werden die zu übertragenden Daten in Blöcke mit P Subsymbolen (P=Datenblocklänge) unterteilt. Als Subsymbol werden dabei jene Daten bezeichnet, die innerhalb eines Symbols auf einem MCM-Kanal übertragen werden. Die einzelnen Subsymbole am Eingang des Interleavers (7) bzw. am Ausgang des De-Interleavers (16) seien geordnete Subsymbole genannt und von I=0, 1,... P-1 durchnumeriert. Die einzelnen Subsymbole am Ausgang des Interleavers (7) bzw. am Eingang des De-Interleavers (16) seien verwürfelte Subsymbole genannt und von J=0, 1,... P-1 durchnumeriert. I und J bezeichnen also die Reihenfolge der geordneten bzw. verwürfelten Subsymbole.

Die erfindungsgemässe Umordnungsvorschrift für den Interleaver (7) und den De-Interleaver (16) lauten

$$J(I) = (K_1 \cdot I) \bmod (P) , \qquad (1)$$

$$I(J) = (K_2 \cdot J) \bmod (P) , \qquad (2)$$

wobei $K_1$ und $K_2$ positive ganze Zahlen sind, für die gilt:

$$(K_1 \cdot K_2) \bmod (P) = 1. \qquad (3)$$

Die letzte Bedingung bedeutet, dass $K_1$ und $K_2$ teilerfremd zu P sind. Damit wird gewährleistet, dass alle geordneten Subsymbole eineindeutig auf die verwürfelten Subsymbole abgebildet werden und der De-Interleaver (16) genau die umgekehrte Operation des Interleavers (7) ausführt. Dieser Interleaver ist ein verallgemeinerter Blockinterleaver. Es werden die einzelnen Subsymbole spaltenweise in eine Matrix mit $K_1$ Zeilen und $K_3$ Spalten eingelesen, wobei $K_3$ die kleinste ganze Zahl grösser oder gleich $P/K_1$ ist, die Zeilen vertauscht und dann zeilenweise ausgelesen.

Für eine optimale Arbeitsweise des Interleavers in Kombination mit dem MCM-Modulationsverfahren wird ferner angenommen, dass ein Block in N Symbole à M Subsymbole (M=Anzahl Subsysmbole pro Symbol, P=M•N) kodiert ist, wobei das erste Symbol die verwürfelten Subsymbole J=0, 1 ... M-1 enthält, das zweite Symbol die verwürfelten Subsymbole M, M+1,... 2M-1, usw., und dass die Anzahl der Kanäle des MCM-Verfahrens gleich M gewählt wird, wobei die verwürfelten Subsymbole eines Blocks in einer festgelegten Reihenfolge auf die MCM-Kanäle abgebildet werden. Dann besagt die Gleichung (3), dass $K_1$ und $K_2$ teilerfremd zu M und N sind. Alle möglichen Realisierungen des De-Interleavers (16), welche die Bedingungen (1)-(3) erfüllen, haben die Eigenschaft, dass sie die durch einen schmalbandigen Störer erzeugten Fehler gleichmässig über den am Ausgang des De-Interleavers (16) anstehenden Datenstrom verteilen. Sind alle Subsymbole eines der M Kanäle am Eingang des De-Interleavers (16) zerstört, so treten diese Fehler am Ausgang des De-Interleavers (16) mit dem maximal möglichen Abstand M auf. Die Struktur des Interleavers garantiert also, dass beim MCM-Verfahren die Subsymbole eines Symbols trotz der Verwürfelung auf verschiedenen Subbändern übertragen werden. Aus diesem Grund ist der Interleaver mit dem MCM-Verfahren kompatibel.

Die Zahlen $K_1$ und $K_2$ werden vorteilhafterweise so gewählt, dass auch die durch Impulsstörungen erzeugten Fehler maximal verteilt werden, d.h. dass der minimale Abstand zwischen zwei Fehlern maximiert wird. Dies geschieht durch eine numerische Optimierung für gegebene Werte von M und N. Als Beispiel wird angenommen, dass das MCM-Verfahren M=8 Kanäle hat, und N=16 solcher Symbole in einem Datenblock zusammengefasst werden, so dass jeder Block M•N=128 Subsymbole enthält. Eine numerische Optimierung führt auf die Lösung $K_1$=17 und $K_2$=113, d. h.

$$\text{Interleaver:} \qquad J(I) = (17 \cdot I) \bmod (128), \qquad (4)$$

$$\text{De-Interleaver:} \qquad I(J) = (113 \cdot J) \bmod (128). \qquad (5)$$

Dadurch werden sowohl Fehler durch schmalbandige Störer mit einem Abstand von 8 Subsymbolen verteilt, als auch die durch einen Impulsstörer erzeugten Blockfehler so verteilt, dass die minimale Distanz zwischen zwei Fehlern 15 beträgt. Dies liegt sehr nahe bei einer oberen Schranke, die N=16 beträgt, die jedoch vermutlich gar nicht erreicht werden kann.

Zusammenfassend lässt sich sagen, dass mit der Erfindung einerseits die Vorteile des MCM-Verfahrens bezüglich Störsicherheit und Übertragungsrate für einen neuen Übertragungskanal genutzt und andererseits durch einen neuen Interleaver und eine Fehlerschutzkodierung nochmals deutlich verbessert werden. Insgesamt steht mit der Erfindung ein Verfahren zur Datenübermittlung in Stromversorgungsnetzen zur Verfügung, bei dem der Einfluss der netzspezifischen Störungen auf die Übertragung deutlich vermindert ist und dennoch eine hohe Datenrate erreicht werden kann.

**BEZEICHNUNGSLISTE**

| | |
|---|---|
| 1 | Sender |
| 2, 4 | Koppelglied (z. B. Koppelkondensator) |
| 3 | Netzleitung eines Stromversorgungsnetzes |
| 5 | Empfänger |
| 6 | Kodierer |
| 7 | Interleaver |
| 8 | Modulator |
| 9 | Leistungsverstärker |
| 10 | Seriell - Parallelwandler |
| 11 | MCM-Modulator |
| 12 | Summierer |
| 13 | Frequenzfilter |
| 14 | Signalverstärker |
| 15 | MCM-Demodulator |
| 16 | De-Interleaver |
| 17 | Dekodierer |
| 18 | Synchronisationsschaltung |

**Patentansprüche**

1. Verfahren zur Datenübertragung über ein Stromversorgungsnetz zwischen einem Sender (1) und einem Empfänger (5), welches folgende Schritte umfasst:

a) sendeseitig Interleaving eines Datenblocks der Länge P durch Umwandlung einer geordneten Subsymbolfolge I=0, 1,... P-1 in eine verwürfelte Subsymbolfolge J=0, 1,... P-1 (I, J, P= positive ganze Zahlen) und
b) Modulation von Trägerfrequenzen mit der verwürfelten Subsymbolfolge sowie
c) empfangsseitig Wiederherstellung der geordneten Subsymbolfolge durch Demodulation und De-Interleaving,

dadurch gekennzeichnet, dass

d) ein MCM-Mehrträger-Modulationsverfahren verwendet wird, wobei aus dem zu übertragenden seriellen Datenstrom parallele Subsymbolströme gebildet und von diesen mehrere Kanäle moduliert werden und
e) das Interleaving gemäss der Vorschrift $J(I) = (K_1 \bullet I) \bmod(P)$ und das De-Interleaving gemäss $I(J) = (K_2 \bullet J) \bmod(P)$ ausgeführt wird, wobei die Konstanten $K_1$ und $K_2$ positive ganze Zahlen sind, welche die Beziehung $(K_1 \bullet K_2) \bmod(P) = 1$ erfüllen.

2. Verfahren nach Anspruch 1, dadurch gekennzeichnet, dass

a) die Datenblocklänge auf $P = M \bullet N$ festgelegt wird (M, N=positive ganze Zahlen), wobei N eine Anzahl Symbole pro Block und M eine Anzahl Subsymbole pro Symbol bezeichnen und
b) die Anzahl der Kanäle und der parallelen Subsymbolströme gleich M gewählt werden.

3. Verfahren nach Anspruch 2, dadurch gekennzeichnet, dass

a) jedes Subsymbol eines Symbols auf einem anderen Kanal übertragen wird,
b) die Anzahl Symbole pro Block auf N=16 und die Anzahl Subsysmbole pro Symbol auf M=8 festgelegt wird und
c) insbesondere für die Konstanten $K_1$ und $K_2$ die ausgezeichneten Werte $K_1 = 17$ und $K_2 = 113$ gewählt werden.

4. Verfahren nach einem der Ansprüche 1-3, dadurch gekennzeichnet, dass sendeseitig die Subsymbole fehlerschutzkodiert werden, vorzugsweise mit einem sogenannten "forward error correction code", und empfangsseitig die unkodierten Subsymbole durch Dekodierung zurückgewonnen werden, z. B. unter Verwendung eines Viterbi-Dekoders.

5. Verfahren nach einem der Ansprüche 1-4, dadurch gekennzeichnet, dass zeitliche Schutzintervalle zwischen der Übertragung von Symbolen eingeführt oder die Symbole mit zyklischen Präfixen versehen werden.

6. System zur Datenübertragung über ein Stromversorgungsnetz, welches einen Sender (1) mit einem Interleaver (7) und Modulator (8) und einen Empfänger (5) mit einem Demodulator (15) und De-Interleaver (16) umfasst,
dadurch gekennzeichnet, dass

a) der Interleaver (7) eine geordnete Subsymbolfolge I=0, 1,... P-1 eines Datenblocks der Länge P in eine verwürfelte Subsymbolfolge J=0, 1,... P-1 gemäss der Vorschrift $J(I) = (K_1 \bullet I) \bmod(P)$ umwandelt (I, J, P, $K_1$=positive ganze Zahlen),
b) der Modulator (8) einen Seriell-Parallelwandler (10) und einen MCM-Mehrträger-Modulator (11) enthält,
c) der De-Interleaver (16) die verwürfelte in die geordnete Subsymbolfolge gemäss der Vorschrift $I(J) = (K_2 \bullet J) \bmod(P)$ rückumwandelt ($K_2$=positive ganze Zahl) und
d) die Konstanten $K_1$, $K_2$ die Beziehung $(K_1 \bullet K_2) \bmod(P) = 1$ erfüllen.

7. System zur Datenübertragung über ein Stromversorgungsnetz nach Anspruch 6, dadurch gekennzeichnet, dass

a) der Sender (1) einen Datenblock der Länge $P = M \bullet N$ in N Symbole à M Subsymbole kodiert,
b) der Seriell-Parallelwandler (10) den zu übertragenen seriellen Datenstrom in M parallele Subsymbolströme wandelt und
c) der MCM-Modulator (11) M Kanäle erzeugt, diese mit je einem der parallelen Subsymbolströme moduliert und einem Summierer (12) zuführt.

8. System zur Datenübertragung über ein Stromversorgungsnetz nach Anspruch 7, dadurch gekennzeichnet, dass

a) der Seriell-Parallelwandler (10) jedes Subsymbol eines Symbols auf einen anderen parallelen Subsymbolstrom verteilt,
b) die Anzahl Symbole pro Block N=16 und die Anzahl Subsysmbole pro Symbol M=8 betragen und
c) insbesondere die Konstanten $K_1$ und $K_2$ die ausgezeichneten Werte $K_1 = 17$ und $K_2 = 113$ annehmen.

9. System zur Datenübertragung über ein Stromversorgungsnetz nach einem der Ansprüche 6-8, dadurch gekennzeichnet, dass

a) der Sender (1) einen Kodierer (6) umfasst, der vorzugsweise mit einem "forward error correction code" arbeitet, und
b) der Empfänger (5) einen Dekodierer (17) umfasst, der vorzugsweise ein Viterbi-Dekoder ist.

10. System zur Datenübertragung über ein Stromversorgungsnetz nach einem der Ansprüche 6-9, dadurch gekennzeichnet, dass der Sender (1) zeitliche Schutzintervalle zwischen der Übertragung von Symbolen einfügt oder die Symbole mit zyklischen Präfixen versieht.

11. System zur Datenübertragung über ein Stromversorgungsnetz nach einem der Ansprüche 6-10, dadurch gekennzeichnet, dass

> a) der Sender (1) einen Leistungsverstärker (9) umfasst,
> b) als Koppelglied (2, 4) zwischen Sender (1) bzw. Empfänger (5) und Netzleitung (3) ein Koppelkondensator oder eine Koppelspule fungiert, und
> c) der Empfänger (5) ein Frequenzfilter (13) und/oder einen Signalverstärker (14) und/oder eine Synchronisationsschaltung (18) umfasst.

12. System zur Datenübertragung über ein Stromversorgungsnetz nach einem der Ansprüche 6-11, dadurch gekennzeichnet, dass Sender (1) und/oder Empfänger (5) an einer Vielzahl von Kommunikationsstandorten verteilt sind und über das Stromverteilnetz Daten austauschen.

13. Verfahren oder System zur Datenübertragung über ein Stromversorgungsnetz nach einem der vorhergehenden Ansprüche, dadurch gekennzeichnet, dass

> a) die Trägerfrequenzen zueinander orthogonal, insbesondere aequidistant, in einem Bereich zwischen 20 kHz und 500 kHz liegen und
> b) die Übertragungsrate mehr als 2 kbit/s beträgt.

# Fig. 1

# Fig. 2

Fig. 3

Fig. 4